# EUROPÄISCHE PATENTANMELDUNG

(11) **EP 1 241 671 A2**
(43) Veröffentlichungstag der Anmeldung: **18.09.2002**
(21) Anmeldenummer: 02002331.3
(22) Anmeldetag: 31.01.2002
(51) Int. Cl.: G11B 23/40, G11B 5/78, G09F 3/02, B65H 75/28, B65D 85/672

(54) **Rohwickel aus streifen- oder bandförmigen Medien mit Identifikations-Kennzeichnung und Verfahren zur Herstellung**

(30) Priorität: 15.03.2001 DE 10112391
(71) Anmelder: EMTEC Magnetics GmbH, 67059 Ludwigshafen (DE)
(72) Erfinder: Scholtysik, Bernd, Dr., 81825 München (DE)

(57) **Zusammenfassung**

Rohwickel aus streifen- oder bandförmige Medien, insbesondere bandförmigen magnetischen Datenaufzeichnungsträgern, bestehend aus auf einem Wickelkern aufgewickelten, auf Gebrauchsbreite geschnittenen Magnetband und einem einfach zu entfernenden und wieder aufzubringenden Verschlußelement (70) mit darin integrierter Identifikationskennzeichnung sowie ein Verfahren zur Herstellung.

## Beschreibung

Die Erfindung betrifft einen Rohwickel aus streifen- oder bandförmigen Medien, insbesondere bandförmigen magnetischen Datenaufzeichnungsträgern mit I-dentifikations-Kennzeichnung.

Sogenannte Rohwickel aus streifen- oder bandförmigen Medien, insbesondere bandförmige magnetische Datenaufzeichnungsträger bestehen im allgemeinen aus auf einem Wickelkern aufgewickeltem, auf Gebrauchsbreite geschnittenen Magnetband von mehreren tausend Metern Länge, einem Verschlußklebestreifen, der das freie Ende des Magnetbandes an der äußersten Lage des Wickels fixiert und einem Etikett, welches zumindest eine Produktkennzeichnung beinhaltet.

Der magnetische Datenaufzeichnungsträger besteht im wesentlichen aus einer Trägerfolie aus Kunststoff und einer darauf aufgebrachten magnetisierbaren Beschichtung. Er wird im allgemeinen in deutlich größerer Breite als die für seine Anwendung notwendige Breite erzeugt, wobei eine flüssige Magnetdispersion mittels dem Fachmann bekannter Beschichtungseinrichtungen auf die Trägerfolie aufgebracht wird, wobei dann die beschichtete Folie einen Trocknungsprozess durchläuft, im allgemeinen kalandriert und schließlich zu sogenannten Halbfabrikatrollen, deren Länge einem Vielfachen der Nutzlänge des konfektionierten Fertigprodukts entspricht, aufgerollt wird.

Nach der Beschichtung erfolgt das Schneiden der Halbfabrikatrolle auf Gebrauchsbreite, wie beispielsweise auf ½" für VHS-Kassetten, in sogenannten Längsschneid- oder Trennmaschinen.

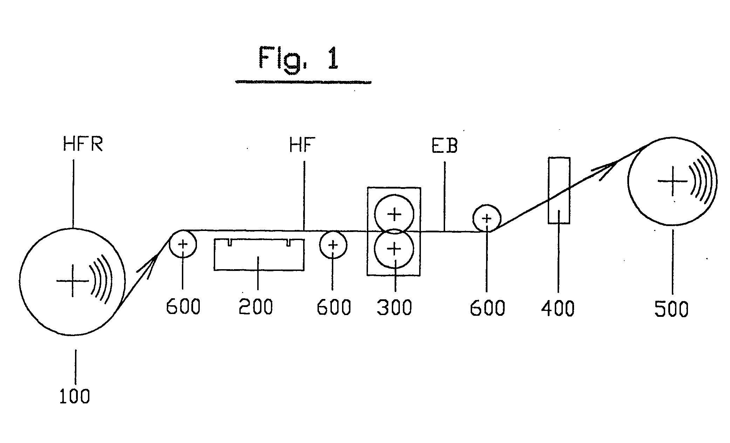

Diese Maschinen bestehen im wesentlichen, wie in Fig. 1 dargestellt, aus einer Abrollstation (100) für Halbfabrikatrollen, einem Schneidtisch (200) zum Verbinden des Endes einer Halbfabrikatrolle (HFR1) mit dem Anfang einer darauf folgenden Halbfabrikatrolle (HFR2), einer Längsschneideinheit (300), einer Bandspreizung (400) zum Vereinzeln der auf Gebrauchsbreite getrennten Bänder, einer Aufwickelstation (500) für die auf Gebrauchsbreite geschnittenen Einzelbänder, und mehreren Führungs- bzw. Antriebswalzen (600) sowohl zum Führen und Fördern der ungetrennten Halbfabrikatbahn (HF) als auch von getrennten Einzelbändern (EB) zwischen den einzelnen Stationen der Maschine. Die Abrollstation (100) kann zur Verkürzung der Stillstandszeit beim Halbfabrikat-Rollenwechsel mit zwei Wicklern versehen sein, in welche die gerade geschnittene Halbfabrikatrolle (HFR1) und die als folgende geschnittene Halbfabrikatrolle (HFR2) einspannbar sind.

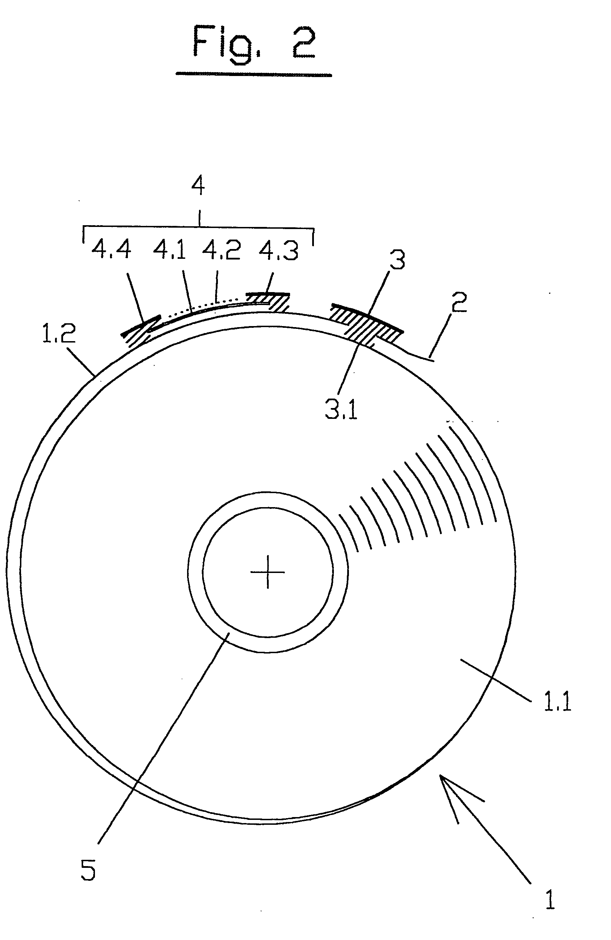

Der Verschlußklebestreifen (3), wie in Fig. 2 dargestellt, wurde bereits in seiner ursprünglichen Form als langgestreckter Klebestreifen (nicht dargestellt), der sich quer über die Breite des zu schneidenden Halbfabrikats (HF1, HF2, nicht dargestellt), im Zuge des Halbfabrikat-Rollenwechsels am Schneidtisch (200) aufgebracht, wobei der Verschlußklebestreifen (3) das Ende der Halbfabrikatbahn (HF1) und den Anfang der folgenden Halbfabrikatbahn (HF2) verbindet. Anschließend durchläuft die mittels des vorgenannten langgestreckten Klebestreifens hergestellte Verbindungsstelle zwischen Bandende einer Halbfabrikatrolle (HFR1) und Bahnanfang einer darauffolgenden Halbfabrikatrolle (HFR2) die Längsschneideinheit (300), gelangt über die Bandspreizung (400) zur Aufwickelstation (500) und verschließt die Rohwickel (1) automatisch, wobei anschließend der Anfang (2) der aus der darauffolgenden Halbfabrikatrolle (HFR2) getrennten Einzelbänder einige Zentimeter hinter der Klebestelle quer abgeschnitten wird und schließlich ein Rohwickel (1), wie in Fig. 2 schematisch dargestellt, entstanden ist.

Die Verbindungsstelle zwischen Bahnende einer Halbfabrikatrolle (HFR1) und Bahnanfang der darauffolgenden Halbfabrikatrolle (HFR2) wird als sogenannte "offene Klebstelle" ausgeführt. Dies bedeutet, dass zwischen dem Ende der einen Halbfabrikatrolle (HFR1) und dem Anfang der darauffolgenden Halbfabrikatrolle (HFR2) ein einige Millimeter breiter Zwischenraum entsteht, so dass ein klebriger Bereich (3.1) verbleibt, der zum Verschluß des Rohwickels (1) dient.

Wie weiterhin aus Fig. 2 ersichtlich, wird der Rohwickel (1) meist noch mit einer Identifikationskennzeichnung (4) welche produktspezifische Daten enthält, versehen. Die Identifikationskennzeichnung (4) erfolgt in der Regel auf einem zusätzlichen Etikett (4.1), das mittels schmaler Klebestreifen (4.3, 4.4) auf der letzten äußeren Wickellage (1.2) des Rohwickels (1) angebracht ist, wobei die Bedruckung (4.2) des zusätzlichen Etiketts (4.1) mit den produktspezifischen Daten entweder im Klartext und/oder als Barcode erfolgt.

Bei der Weiterverarbeitung der Rohwickel (1), wie beispielsweise das Einspulen in Kassetten oder Bespielen von ganzen Rohwickeln (1) mit Audio- oder Videoaufzeichnungen in Duplizieranlagen müssen die Rohwickel (1) wieder geöffnet werden, wobei insbesondere das Entfernen der Identifikationskennzeichnung (4) umständlich ist, da zumindest die beiden Endbereiche des Etiketts (4.1) mittels der Klebestreifen (4.3, 4.4) fest mit der äußeren Wickellage (1.2) verbunden sind und somit von dieser abzulösen ist.

Auch im Rahmen der Qualitätssicherung müssen zur Prüfung und Dokumentation qualitätsrelevanter Daten einzelne Rohwickel (1) geöffnet werden. Um nach erfolgter Prüfung wieder einen verkaufsfähigen Rohwickel (1) zu erhalten, muß dieser wieder ordnungsgemäß mit dem Verschlußklebestreifen (3) verschlossen werden, wobei auch die Identifikationskennzeichnung (4) wieder anzubringen ist.

Dies bedeutet für die Handhabung von Rohwickeln (1) nach dem Stand der Technik einen umständlichen Vorgang, da sowohl das Öffnen als auch das Verschließen einen zweiteiligen Arbeitsgang erfordert, nämlich separates Entfernen von Verschlußklebestreifen (3) und Identifikationskennzeichnung (4) beim Öffnen des Rohwickels (1) und separates Anbringen von Verschlußklebestreifen (3) und Identifikationskennzeichnung (4) beim Verschließen des Rohwickels (1).

Es bestand daher die Aufgabe einen Rohwickel von streifen- oder bandförmigen Medien, insbesondere bandförmigen magnetischen Datenaufzeichnungsträgern bereitzustellen, der nicht mit den Nachteilen des Standes der Technik behaftet ist und somit den Aufwand beim Öffnen und Verschließen des Rohwickels erheblich reduziert.

Eine weitere Aufgabe bestand darin, ein Verfahren zur Herstellung eines solchen Rohwickels bereitzustellen.

Die Aufgabe wurde gelöst mit einem Rohwickel aus streifen- oder bandförmigen Medien, insbesondere bandförmigen magnetischen Datenaufzeichnungsträgern, bestehend aus einem Wickelkern mit darauf aufgewickeltem streifenoder bandförmigem Datenaufzeichnungsträger, wobei der Rohwickel mit einem Verschlußelement, welches die Funktion von Verschlußklebestreifen und Identifikationskennzeichnung vereint, verschlossen ist, wobei das Verschlußelement so auf der äußeren Wickellage des Rohwickels angebracht ist, dass ein freies Ende der äußeren Wickellage des Rohwickels im Bereich unterhalb des Kennzeichnungsabschnitts gebildet wird.

Die zweite Aufgabe wurde gelöst mit einem Verfahren zur Herstellung eines Rohwickels aus streifen- oder bandförmigen Medien, insbesondere bandförmigen magnetischen Datenaufzeichnungsträgern, bestehend aus einem Wickelkern mit darauf aufgewickeltem streifen- oder bandförmigem Datenaufzeichnungsträger und einem Verschlußelement, wobei das Verschlußelement beim Durchlaufen der Verbindungsstelle zwischen dem Ende einer ersten Halbfabrikatbahn und dem davon beabstandeten Anfang einer weiteren Halbfabrikatbahn durch die Längsschneideinheit einer Längsschneidmaschine gebildet wird, und wobei die Verbindungsstelle aus zwei Klebestreifen und dem Etikettstreifen besteht, wobei der Etikettstreifen das Ende der ersten Halbfabrikatbahn im Bereich (X) überlappt und so ein freies Ende der ersten Halbfabrikatbahn entsteht.

Weitere Einzelheiten der Erfindung gehen aus den Unteransprüchen, der Beschreibung und den Zeichnungen hervor.

Die Zeichnungen zeigen in
- Fig. 1:: eine schematische Darstellung einer Längsschneid- oder Trennmaschine
- Fig. 2:: eine schematische Darstellung eines Rohwickels nach dem Stand der Technik
- Fig.3:: eine schematische Darstellung eines erfindungsgemäßen Rohwickels
- Fig. 4:: eine schematische Draufsicht auf einen Schneidtisch
- Fig. 5:: eine Seitenansicht der Anordnung gemäß Fig. 4

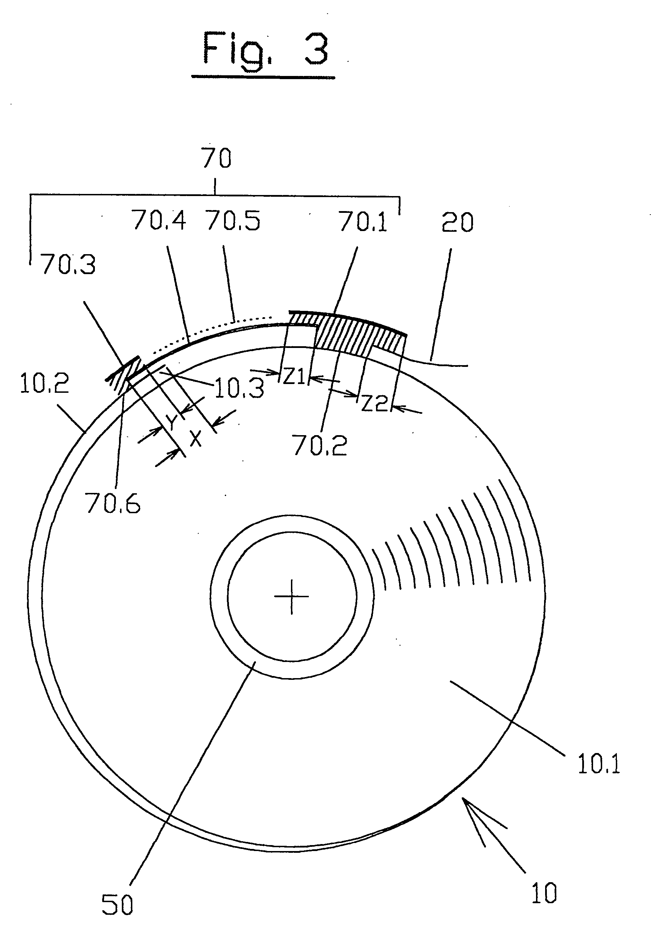

Ein mit einem erfindungsgemäßen Verschlußelement (70) verschlossener und gekennzeichneter Rohwickel (10) ist schematisch in Fig. 3 dargestellt, wobei die Breite eines einzelnen Verschlußelementes (70) der Breite des aufgewickelten Datenaufzeichnungsträgers entspricht.

Das einzelne Verschlußelement (70) besteht im wesentlichen aus mindestens zwei einseitig haftenden Klebestreifenabschnitten (70.1, 70.3) und einem dazwischen angebrachten Kennzeichnungsetikettabschnitt (70.4) wobei jeder Klebestreifenabschnitt (70.1, 70.3) ein freies Ende des Kennzeichnungsetikettabschnitts (70.4) überlappt und wobei das Verschlußelement (70) so auf der äußeren Wickellage (10.2) angebracht ist, dass ein freies Ende (10.3) der äußeren Wickellage (10.2) mit der Länge von einigen Zentimetern gebildet wird.

Für den Bedarfsfall der Anmelderin, also für den Fall eines magnetischen Datenaufzeichnungsträgers, haben sich Längen von etwa 30 mm für den Klebestreifenabschnitt (70.1), etwa 20 mm für Klebestreifenabschnitt (70.3) und etwa 100 mm für den Kennzeichnungsetikettabschnitt (70.4) als günstig erwiesen. Für die Überlappung von Klebestreifenabschnitt (70.1, 70.3) und Kennzeichnungsetikettabschnitt (70.4) ist eine Länge von ca. 5 bis 10 mm ausreichend.

Der besondere Vorteil des Verschlußelements (70) besteht darin, dass zu seiner Herstellung billige, handelsübliche streifenförmige Ausgangsmaterialen, welche auch als Rollenware lieferbar sind, zur Anwendung kommen, so dass auf teure Sonderanfertigungen verzichtet werden kann.

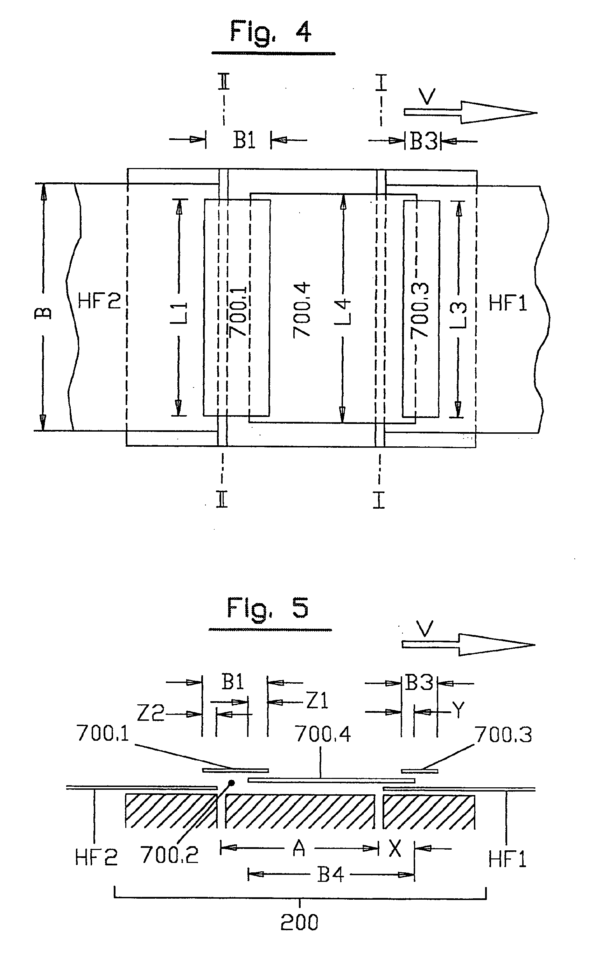

Ein Verfahren für die Herstellung eines erfindungsgemäßen Rohwickels (10) erfolgt nun unter Bezugnahme auf Fig.1 und Fig. 3 bis Fig. 5.

Wie aus Fig. 1 ersichtlich, wird eine, in der Abrollstation (100) gelagerte, erste Halbfabrikatrolle (HFR1) abgerollt und mittels Führungswalzen (600) zunächst berührungslos über den Schneidtisch (200) geführt und gelangt von da aus in die Längsschneideinheit (300), wobei das Halbfabrikat (HF1) zu Einzelbändern (EB) der gewünschten Breite geschnitten wird. Nach Passieren der Längsschneideinheit (300) werden die Einzelbänder (EB) in einer Bandspreizung (400) auseinander gefächert und der Aufwicklung (500) zugeführt, wobei die Einzelbänder auf Kerne (50) aufgewickelt werden und so Rohwickel (10) mit mehreren tausend Metern Länge entstehen.

Nachdem die in der Abrollstation (100) gelagerte erste Halbfabrikatrolle (HFR1) nahezu restlos aufgetrennt ist, wird die Trennmaschine zum Stillstand gebracht. Durch Nachlassen der Bahnspannung zwischen der Abrollstation (100) und Längsschneideinheit (300) senkt sich die Halbfabrikatbahn (HF1) auf den Schneidtisch (200) herab. Der Schneidtisch (200) weist eine poröse Oberfläche auf, die von der Unterseite her mit Vakuum beaufschlagbar ist, wodurch die von der Abrollstation (100) kommende Halbfabrikatbahn (HF1) auf dem Schneidtisch (200) fixiert wird. Anschließend wird die Halbfabrikatbahn (HF1) entlang der Linie I-I quer zur Laufrichtung (V) der Bahn abgeschnitten, das in Richtung Abrollstation (100) weisende Ende der Halbfabrikatbahn (HF1) wird vom Schneidtisch (200) abgezogen und der verbliebene Rest der Halbfabrikatrolle (HFR1) wird aus der Abrollstation (100) entfernt. Eine weitere zu trennende Halbfabrikatrolle (HFR2) wird in die Abrollstation (100) eingelegt, der Anfang der Halbfabrikatbahn (HF2) bis zum Schneidtisch (200) herangeführt, auf diesem mittels dem noch angelegten Vakuum fixiert und entlang der Linie II-II quer zur Laufrichtung (V) der Bahn abgeschnitten. Der nun abgetrennte Anfang der Halbfabrikatbahn (HF2) wird vom Schneidtisch (200) entfernt, so dass nunmehr das Ende aus der Halbfabrikatbahn (HF1) und der Anfang aus der Halbfabrikatbahn (HF2) um das Maß (A) von einander beabstandet ist, wobei das Maß (A) auf die Breite (B4) des Etikettstreifens (700.4) und die Breite der Überlappung im Bereich (X) abgestimmt ist.

Mit Beendigung des Längsschneidvorgangs der ersten Halbfabrikatrolle (HFR1) werden die gesammelten produktspezifischen Daten mittels eines Druckers auf den Etikettstreifen (700.4) übertragen. Die Länge (L4) des Etikettstreifens (700.4) entspricht in etwa der Breite (B) der aufzutrennenden Halbfabrikatbahnen (HF1, HF2), während die Breite (B4) des Etikettstreifens (700.4) auf die Länge der Bedruckung (70.5) und die notwendigen Überlappungen mit den beiden Klebestreifen (700.1, 700.3) in den Bereichen (Y, Z1) abgestimmt ist. Als Ausgangsmaterial für den zu bedruckenden Etikettstreifen (700.4) ist sowohl Kunststofffolie, wie PET, als auch Papier geeignet. Die Bedruckung (nicht dargestellt) des Etikettstreifens (700.4) erfolgt mit den üblichen Verfahren, wie beispielsweise mit Nadel- oder Thermotransferdruck und ist senkrecht zur Länge (L4) des Etikettstreifen (700.4) angebracht, wobei das Zeilenraster (nicht dargestellt) der Bedruckung auf die Breite der getrennten Einzelbänder (EB) abgestimmt ist. Für die Klebestreifen (700.1, 700.3) ist handelsübliche, einseitig haftende Rollenware vorteilhaft verwendbar. Falls Klebestreifen (700.1, 700.3) mit unterschiedlichen Breiten (B1, B3) verwendet werden, so sind zur leichteren Unterscheidung Klebestreifen mit unterschiedlichen Farben vorteilhaft. Farbige Klebestreifen können auch zur sortenspezifischen Kennzeichnung der Rohwickel verwendet werden.

Nachdem der Anfang der Halbfabrikatbahn (HF2) und das Ende der Halbfabrikatbahn (HF1) wie zuvor beschrieben auf dem Schneidtisch (200) fixiert sind, wird der mit der Bedruckung (70.5) versehene Etikettstreifen (700.4) aus dem Drucker entnommen und so auf den freien Bereich zwischen den beiden Halbfabrikatbahnen (HF1, HF2) plaziert, dass der Etikettstreifen (700.4) das Ende der Halbfabrikatbahn (HF1) im Bereich (X) überlappt und so ein freies Ende der ersten Halbfabrikatbahn (HF1) entsteht. Durch das am Schneidtisch noch anstehende Vakuum wird auch der Etikettstreifen (700.4) in seiner Lage fixiert.

Anschließend werden die beiden Klebestreifen (700.1, 700.3) quer zur Bahnlaufrichtung (V) so aufgeklebt, dass zwischen dem Klebestreifen (700.3) und dem Etikettstreifen (700.4) im Bereich (Y) eine Überlappung entsteht und dass zwischen dem Klebestreifen (700.1) und der Halbfabrikatbahn (HF2) einerseits eine Überlappung im Bereich (Z2) und zwischen dem Klebestreifen (700.1) und dem Etikettstreifen (700.4) andererseits eine Überlappung im Bereich (Z1) gebildet wird.

Die Breite (B1) des Klebestreifens (700.1) entspricht der Summe aus den Breiten der Überlappungen im Bereich (Z1, Z2) und der Breite des klebrigen Bereichs (700.2) der "offenen Klebestelle".

Die Breite (B3) des Klebestreifens (700.3) ist so bemessen, dass neben der Überlappung im Bereich (Y) auch noch eine ausreichende Klebeverbindung zur ersten Halbfabrikatbahn (HF1) entsteht. Die Länge der Klebestreifen (L1, L3) entspricht in etwa der Länge (L4) des Etikettstreifens (700.4)

Nachdem die beiden Halbfabrikatbahnen (HF1, HF2) mittels der Streifenkombination (700.1, 700.3, 700.4) fest miteinander verbunden sind, wird das am Schneidtisch (200) anliegende Vakuum abgeschaltet, die Bahn gespannt und die Trennmaschine wieder gestartet. Beim Passieren der Verbindungsstelle zwischen den beiden um das Maß (A) beabstandeten Halbfabrikatbahnen (HF1, HF2) durch die Längsschneideinheit wird auch die Streifenkombination (700.1, 700.3, 700.4) entsprechend aufgetrennt und die einzelnen Verschlußelemente (70) entstehen. Mit Ankunft der sogenannten "offenen Klebestelle" am Umfang der in der Aufwicklung entstandenen Rohwickel (10) werden diese automatisch verschlossen.

Einige Zentimeter nach der offenen Klebestelle, werden nun die aus der Halbfabrikatbahn (HF2) getrennten Einzelbänder (EB) quer abgeschnitten, so dass an jedem Rohwickel (10) ein freies Ende (20) eines aus der Halbfabrikatbahn (HF2) getrennten Einzelbandes (EB) verbleibt.

Damit sind die gestellten Aufgaben gelöst und der so hergestellte Rohwickel (10) ist einfach zu Öffnen und wieder zu Verschließen, wobei zum Öffnen des Rohwickels (10) am freien Ende (20) radial vom Umfang des Rohwickels weg gezogen wird und sich das Verschlußelement (70) von der äußeren Lage (10.2) des Rohwickels (10) im Bereich (70.2) löst. Durch weiteres radiales Ziehen am freien Ende (20) in gleicher Richtung und unter gleichzeitigem Festhalten des freien Endes (10.3) der äußeren Lage (10.2) des Rohwickels (10) löst sich der klebrige Bereich (70.6) des Klebestreifens (70.3) ebenfalls von der äußeren Lage (10.2) und das Verschlußelement (70) ist vollständig vom Rohwickel (10) entfernt.

Umgekehrt ist der Rohwickel (10) wieder einfach mit dem Verschlußelement (70) verschließbar, indem das Verschlußelement (70) zuerst mit dem klebrigen Bereich (70.6) des Klebestreifens (70.3) so auf der äußeren Lage (10.2) des Rohwickels (10) befestigt wird, so dass wiederum ein freies Ende (10.3) entsteht und darauffolgend an dem am Verschlußelement (70) anhaftenden freien Ende (20) zuerst tangential zum Umfang des Rohwickels hin gezogen und dann der Klebestreifen (70.1) gegen die äußere Lage des Rohwickels (10) gedrückt wird, wobei der die offene Klebestelle bildende klebrige Bereich (70.2) des Klebestreifens (70.1) den Rohwickel (10) wieder verschließt.

Die Anwendung der zuvor beschriebenen Erfindung ist nicht auf Rohwickel aus magnetischen Datenaufzeichnungsträgern beschränkt, sondern ist auch vorteilhaft bei allen andern, mit Aufzeichnungs- und Funktionsschichten versehenen, streifen- oder bandförmigen Medien anwendbar.

## Patentansprüche

1. Rohwickel (10) aus streifen- oder bandförmigen Medien, insbesondere bandförmigen magnetischen Datenaufzeichnungsträgern, bestehend aus einem Wickelkern (50) mit darauf aufgewickeltem streifen- oder bandförmigem Datenaufzeichnungsträger (10.1), **dadurch gekennzeichnet, dass** das Verschlußelement (70) so an der äußeren Wickellage (10.2) des Rohwickels (10) angebracht ist, dass ein freies Ende (10.3) der äußeren Wickellage (10.2) des Rohwickels (10) im Bereich unterhalb des Kennzeichnungsabschnitts (70.4) gebildet wird.

2. Rohwickel (10) nach Anspruch 1, **dadurch gekennzeichnet, dass** das Verschlußelement (70) mindestens aus den Klebestreifenabschnitten (70.1, 70.3) und einem dazwischen liegenden Kennzeichnungsetikettabschnitt (70.4) besteht.

3. Rohwickel (10) nach Anspruch 2, **dadurch gekennzeichnet, dass** der Klebestreifenabschnitt (70.3) das eine freie Ende des Kennzeichnungsetikettabschnitts (70.4) im Bereich (Y) und der Klebestreifenabschnitt (70.1) das andere freie Ende des Kennzeichnungsetikettabschnitts (70.4) im Bereich (Z1) überlappt.

4. Verfahren zur Herstellung eines Rohwickels (10) aus streifen- oder bandförmigen Medien, insbesondere bandförmigen magnetischen Datenaufzeichnungsträgern (10.1), bestehend aus einem Wickelkern (50) mit darauf aufgewickeltem streifen- oder bandförmigem Datenaufzeichnungsträger (10.1) und einem Verschlußelement (70), wobei das Verschlußelement (70) beim Durchlaufen der Verbindungsstelle zwischen dem Ende einer ersten Halbfabrikatbahn (HF1) und dem davon um das Maß (A) beabstandeten Anfang einer weiteren Halbfabrikatbahn (HF2) durch die Längsschneideinheit (300) einer Längsschneidmaschine gebildet wird, und wobei die Verbindungsstelle aus den Klebestreifen (700.1, 700.3) und dem Etikettstreifen (700.4) besteht, **dadurch gekennzeichnet, dass** der Etikettstreifen (700.4) das Ende der ersten Halbfabrikatbahn (HF1) im Bereich (X) überlappt und so ein freies Ende der ersten Halbfabrikatbahn (HF1) entsteht.
